# EUROPEAN PATENT APPLICATION

(11) **EP 2 910 696 A2**
(43) Date of publication of application: **26.08.2015**
(21) Application number: 15000113.9
(22) Date of filing: 12.01.2015
(51) Int. Cl.: E03D 9/08

(54) **FLUSH-O-WASH**

(30) Priority: 14.01.2014 GB 201400626
(71) Applicant: Selassie, Waheba, London N13 5QR (GB)
(72) Inventor: Selassie, Waheba, London N13 5QR (GB)

(57) **Abstract**

A spray / flush - O - wash series A and B device unit in figure 1 - 13d, includes attachment means numbers and letters from 1 - 13d for attaching the unit together and the technical aspect for the operation from the top of a toilet pan / built in or attached to lid / seat covers, alternatively built in on new toilet pans or attached onto pre-existing toilet pans, which can fully operate by push head cap / buttons by any of the technical support and individual in used. One of the said functioning inner section extremity having a transversely extending parentally closed channel for receiving and functionally engaging an attached to said body so as to designate arm connection to create a flush spray. The central upper area to which water store temporally deployed and resume each time a flush is taken place of said support device in relationship and will be fully functioning each time the head / button is push and the operating moving parts of said device in motion and the blue light by way of a safely flat battery connection device in push head on the front and center of lid / toilet seat cover thereof.

## Description

This invention relates to a new and useful device for use on toilet pans etc.., and the main principal object of the invention is to enable the occupancy on a toilet pan to have the benefit of applying a spray of liquid to the surrounding area of the feces exit. This objective is achieved by the spraying operative system design to work within a toilet lid referred to as a built-in spray mechanism lid on a toilet pan of "A" and "B" series. And while I am aware that toilet lids have been devised in the past, in all such instance a spray / washes the feces exit after completing of use on a toilet pan is necessary. In other words, a spray - O - wash will also serve as water / liquid container which will provides the liquid for spraying to wash the O, and a flushing system working with close couple cistern and pan with down pipes. It is quite obvious when a person is in used on a toilet; very often after use it is not always sure that the feces exit is properly clean. If a survey is conducted the result would be alarming. This invention of Spray - O - wash A and B now show an inventive step of a operation built within and therefore, this devise is design to provide a spray liquid to give a more clean area after using a toilet pan. As the use of the conventional toilet pan and lid, commonly known as pan and seat covers but does not provide a spray method to help the user with a proper wash / spray of the area after use on a toilet pan. Spray / flush - O - wash Series A, of its sister, flush "O" wash Series B, are both different in characteristic and technical field. But provide the help needed which design to assist a person and clean the area after using. Spray / flush - O - wash series A and B will also provide sufficient assistance to make the user feeling more fresh and clean. Another objective is achieved by the provision of an easy reach to operate the spraying system as it is located at the front of the toilet seat. At times there are many who feels discomfort even after much wiping, with dry toilet tissue, only if there was a little spray of liquid to help wash away and around the area of the "O", which is the meaning and symbol between Spray and Wash. Spray / flush - O - wash A and B dose not cause any problems and will only serve as a helping hand to any user on the toilet pans in home, offices and public places, etc. Spray / flush - O - wash A and B operation is unique and will generally accepted by its operation and with this new innovation help has come to clean up the area where we often can't see and knowing by many if there was a little spray of water / liquid to eliminate the necessity after when nature call unexpected either at home, at the office are out in public. Another feature of Spray / flush - O -wash A and B is a new device by functioning means with construction arrangements to function with any toilet pan as an intergraded operating system / device substantially syphonic order to be adopted by the user in an easy way thereof.

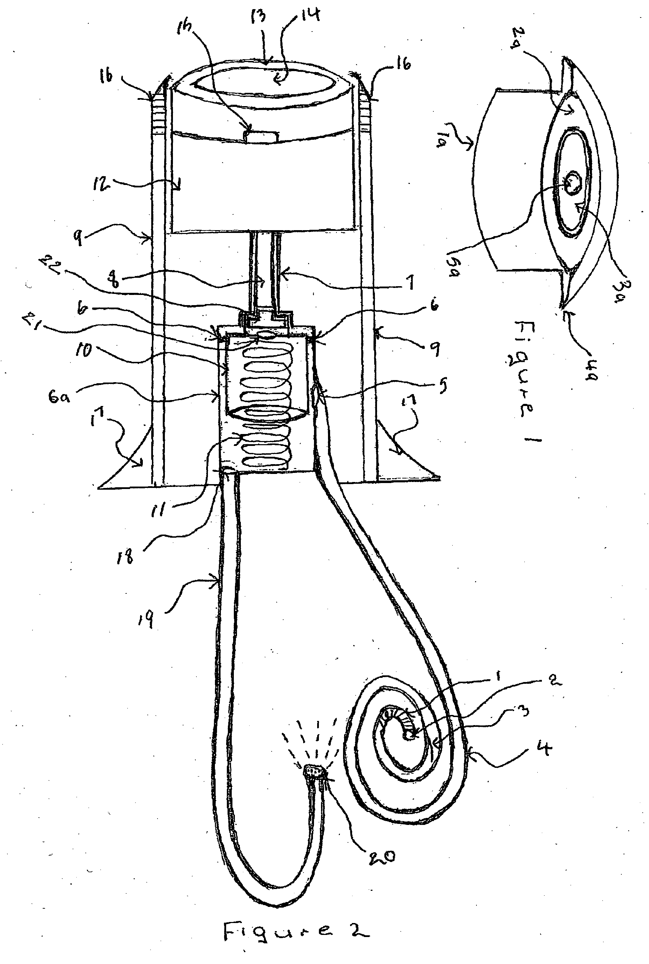

Some of the advantages of this invention lie in its simplicity of construction, in its adaptability for expedition and economical installation on toilet pans of various types, and in its adoptability to economical manufacture. With the above more important object and feature in view and such other objects and features as may become apparent as this specification proceeds, the invention consists essentially of the arrangement and construction of parts as illustrated in the accompanying drawing in which:
I have device the construction illustrated in the accompany drawing forming a part of this specification. It is, however, to be understood that the invention is not limited to these specific details of construction and arrangement shown, but may embody various change and
modification within the scope of the invention in these drawing of spray / flush - O - wash Series A and B. The invention will now be described solely by way of example and with reference to the accompanying drawing with numbers from figure 1 - 13d and by numbers and letters with the foregoing and other objects in view, of which:
   **Figure 1** Shows a screw down cap which attach to fig. 2 to hold in place as a tight fix with a head ring flat surface with a round circle of blue light and the head button for the perspective flush thereof.
   **Figure 2** Shows spray - O - wash invention device of will a spray construction system design to operate in / with toilet lid - seats of any shape and design with the operating head button located at hand reach at the front of the lid - seats thereof. Within the housing cylinder of the device is the operating spraying system with in / out hose thereof.

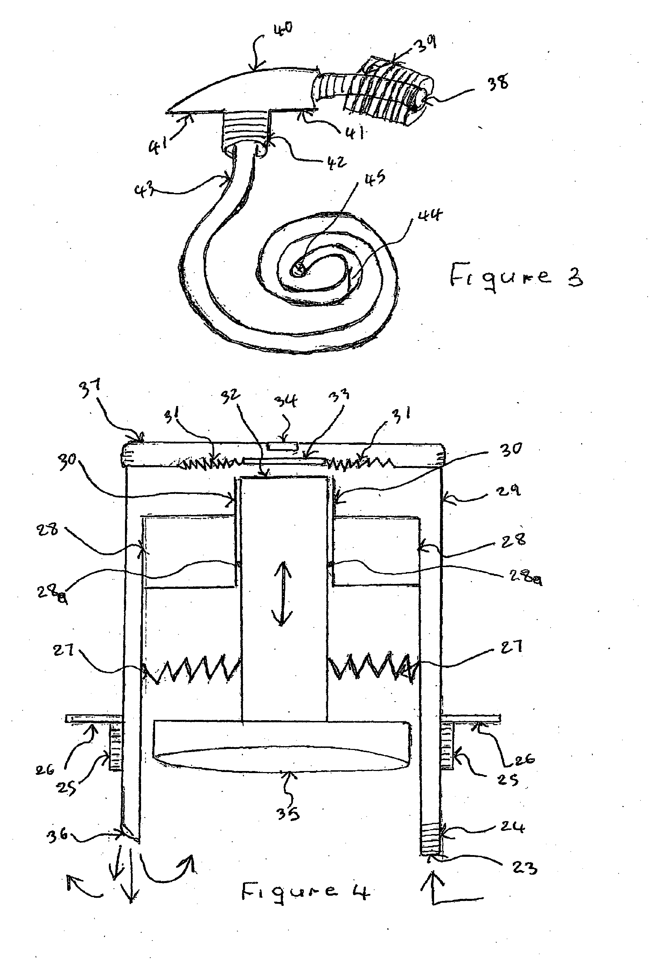

   **Figure 3** shows an inlet feed to toilet lid - seat in / out with a screw in to cover of the toilet seat to its flat bottom structure for a flat finish on top of toilet seat cover thereof.
   **Figure 4** shows a front view of Flush - O - wash Series A, Shows the connecting device of the water feed in relation with figure 1a, but alternative the device within the center of the lid - seat where the filling valve design with a blue light for indicating liquid full in container. Where a round float head and rubber connection for up and down movement is situated for ascending / descending to indicate full or empty - low in water - liquid. A screw down male / female connection to toilet seat cover flushing means, which will be between 25 to 50mm high with the rest of the device body below lid - seat surface into an curvature operative position on the pan thereof.

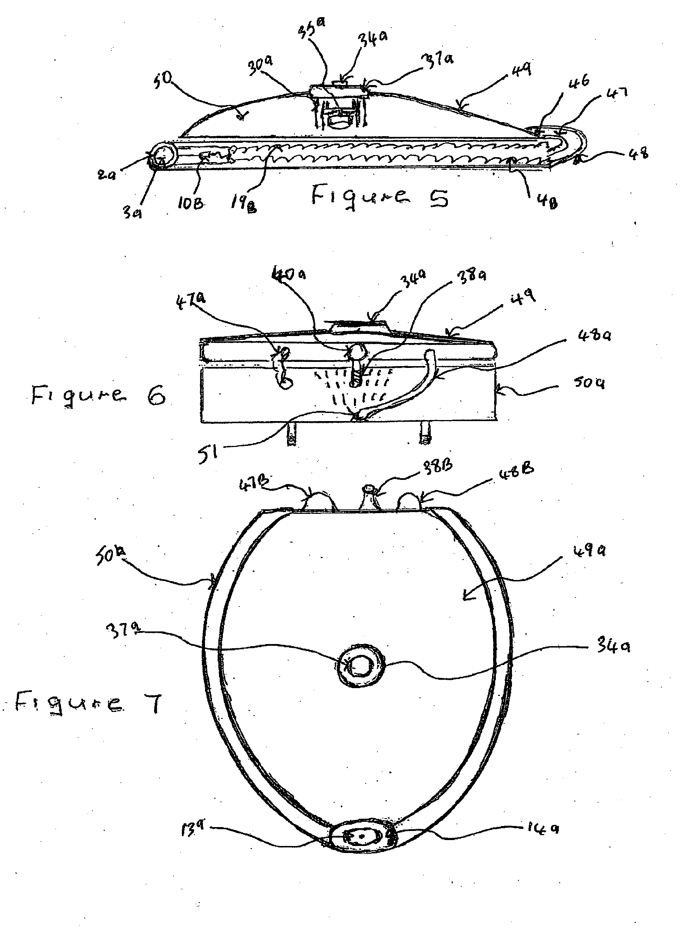

   **Figure 5** Shows a combination close lid - seat side view of parts of spray - O - wash series A with the operating spraying device of fig 1, 1a, 2 and 3 operating system connected within thereof.
   **Figure 6** Shows the same relation as figure 1, 1a, 2, and 3 at a back view but alternative a more illustration of connection of in / outlet with the spraying head at the base of lid - seat with spray deploying from spray - O - wash Series A when a flush is in operation without occupancy, only to shows the spray does provides its service to designated area being preferably curvature spot thereof.
   **Figure 7** shows the close lid - seat at a top viewing down with water gage on top and its operating system within of fig. 1, 2, 3, 4, 5 and 6 thereof.

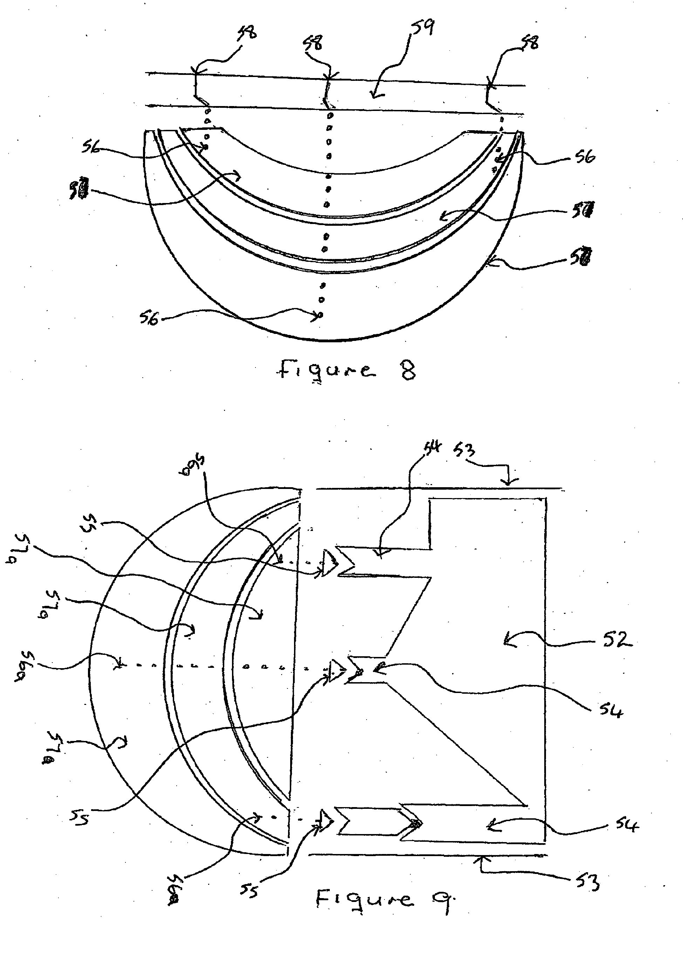

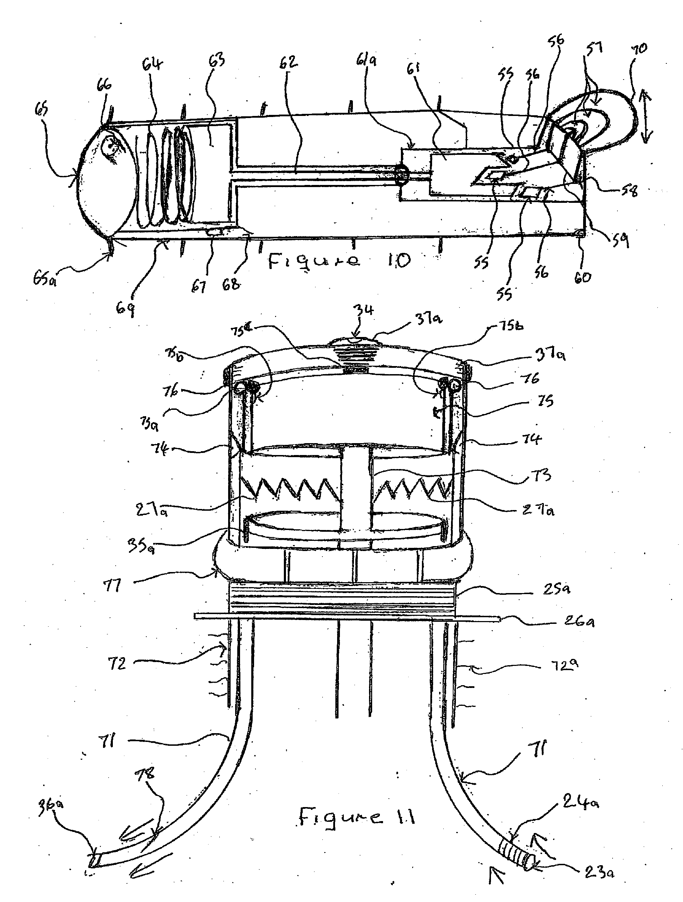

   **Figure 8** Shows a back view of the actual device of spray - O - wash Series B outside the device at the rear of pan where water / liquid deploy when a flush is made from cistern or down pipe to activate the livers and its main connection substantially showing at the back of fig. 10.
   **Figure 9** shows a side view position with a clearer view of the design of spray - O - wash Series B with some of it operating parts to function in its syphonic order / action combine with fig. 8 thereof.
   **Figure 10** shows a side view position of the device all its connection for operation functioning means
   **Figure 11** shows another version of fig. 4 with inlet valve to feed water / liquid and an outlet of which the water volume in lid container store to operate the automatic system by way of water pressure pushing independently the gate cylinder up to close which turn on a blue light at top of head on lid - seat to indicate full and down when water / liquid is lower. The inlet is connected to fig. 1 which causes the feed thereof. Fig. 3 to create feed which cause the action for spray - O - wash Series A, when a flush is made from button / head by the user.

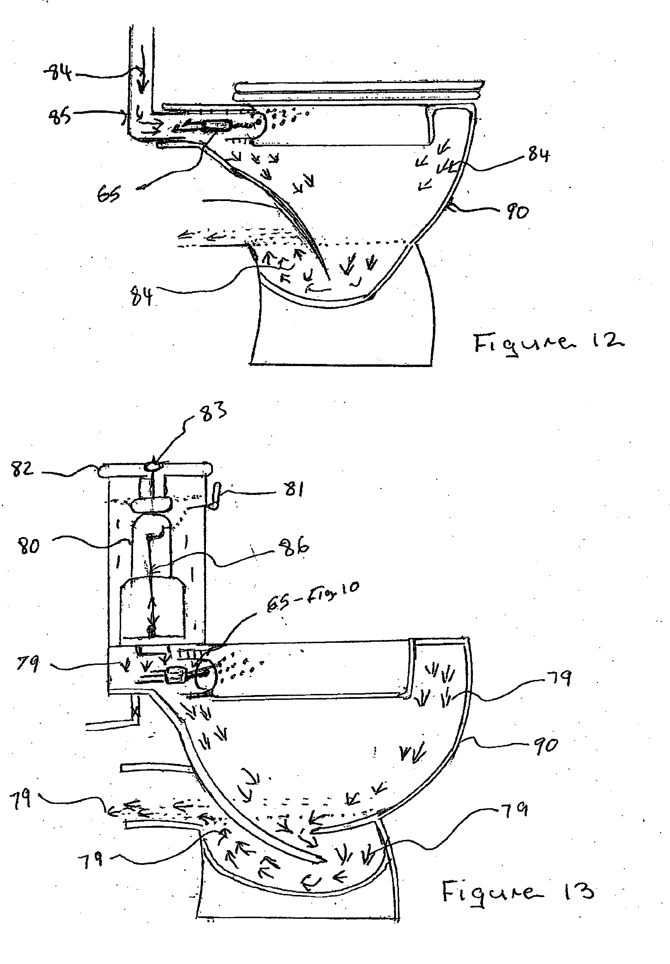

   **Figure 12** Shows the interior of a part of spray - O - wash Series B technical field operative system of the different parts which works together by the force of water coming down in a down pipe which activate the livers to create a flush spray of fig. 10 operating device insert at rear of toilet pans thereof.

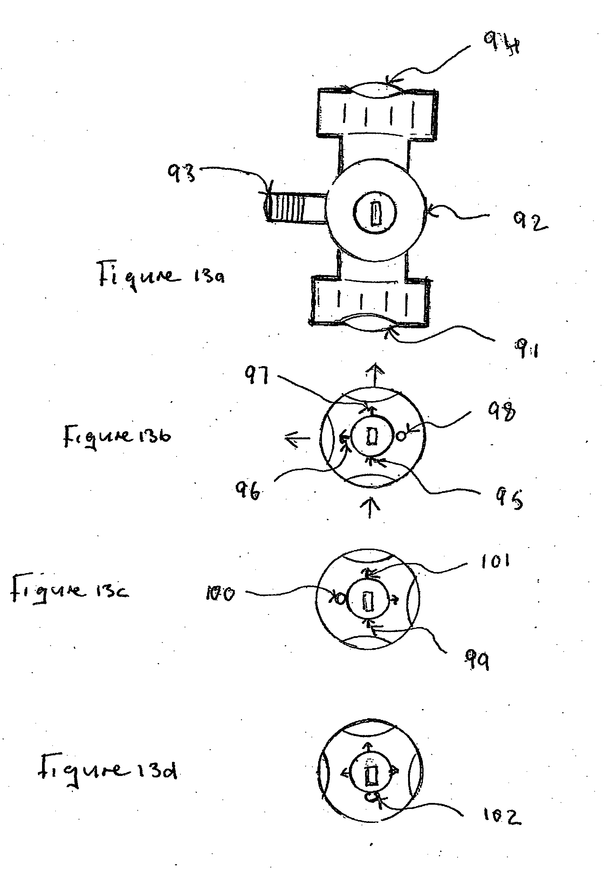

   **Figure 13** shows the same operating system of fig. 12 but alternative with a close couple cistern pointing position of flush, either by push button or by hand leaver connect to cistern either way the user flush the cistern the spraying operating system will activate and preform its shifting means in operation thereof.
   **Figure 13a -13d** show a three way valve as a part of a kit to be use with fig. 1, 2, 3, 4, 5, 6, 7 and 11 to supply water / liquid to lid / seat cover, it is a part of the device as a reduced in size to maintain minimum flow / feed to lid / seat cover. The size will be very, but for the illustration 15m x 15m x 10m in a one unit design thereof.

The foregoing is considered as illustration only of the principles of the invention of Flush - O - wash Series A and B. Further, since numerous modifications and change will readily occur to skilled in the art, it is not desire to limit the invention to the exact construction and operation shown and described, and accordingly all suitable modifications and equivalents may resorted to falling within the scope of Flush - O - wash Series A and B invention.

The embodiment of the present invention as shown in fig. 1-13d will be better understood by reference to the accompanying description wherein, fig. 1 has attached members as number and letters to be described solely by way of example and with reference to the accompanying drawing.

Fig. 1 shows on outline blueprint, the head cap where attached member **1a** the housing head attached to member **2a** the first independent in and out section of the push head, attached to member **3a**, the second independent head, attached to member **4a**, the flat surface which hold against lid / seat frame and member **5a** attached **3a** is the blue light indicator in center.

Fig. 2 shows on outline blueprint, where attached member **1** is the push on end, attached to member **2** the inlet hose hole attached to member **3** no return attached to member the main inlet hose attached to member **5** the water in feed hole to water holding chamber 6a, attached member **6** the rubber seal inside housing holding water chamber. Attached to member **7** the hollow rod chamber, which attach to member **12** the inner head housing, attached to member **8** the main rod, which push member **10** down to squeeze out water / liquid to designate area and re-filled chamber each time a squeeze is made. Attached to member **11** the main spring for in and out operation of device, attached to member **13** blue light second option, attached to member **14** another option **2a**, attached **15** mini light bulb, attached to member **16s** female head screw to hold fig. 1 secure. Attached to member **17** the stop section of device into lid seat, attached to member 18 the out let section of spray hose to designate area, attaché to member **20** the spraying end. Attached to member **21** the air release hole attached to member **22** independent head valve within device.

Fig. 4 shows on outline blueprint, where attached member **23** inlet hose attached to member **24**, the push on section of main feed hose, attached to member **25** the screw in section of main device, attached to member **26**, the flat section of main device, attached **27** independent rubber for up and down movement when water / liquid is high or low, attached to member **28a** inner rubber seal, attached to member **28** structure for head hammer member **32** of main device member **29**, attached to members **30** side pillars, attached to member **31**, flexi rubbers which move up to turn on light indicating water / liquid full, and down water / liquid low moving down attached to member **33** a plastic compliant attached to member **34** blue light indicator. Attached to member **35** bell house for up and down movement by water / liquid increase / decrease, attached to members **36** the outlet water / liquid pipe line-, attached to member **37** the main screw down cap with connection for the lighting indicator.

Fig. 3 shows on outline blueprint where attached member **38** inlet main water / liquid feed attached to member **39** screw on cap of push fitted attached to member **40** main feed head attached to member **41** bottom to lid / seat cover surface, attached to member **42** the screw in to lid / seat cover attached to member **43** inlet hose in lid / seat cover attached to member 44 open / close no return attached to member **45** outlet water / liquid end.

Fig. 5 shows on outline blueprint, where attachment member **46** is fig 1, attached to member **47** the inlet water supply to lid / seat cover, attached to member **48** the outlet from lid / seat cover to designated spraying area, attached to member **49** the top of lid / seat cover attached to member **50** main device of fig. 5 attached to member **2a** the complete device fig. 2 system, attached to **3a** the independent in and out head on fig. 1 attached to member **10b** the main push down of water squeezing out of fig. 2, attached to member **19b** outlet hose to designated area.

Fig. 6 shows on outline blueprint, where attachment member **51** the outlet spray off point to designated area when an individual is in use on a toilet pan, attached to member **50a** the main device of fig 5, except at a rear view, attached to member **48a** as with member **48** in fig. 5 attached to member **49a** as with member **49** in fig 5 and fig 6, the lid / seat cover the water / liquid container, attached to member **50** the main unit device as in fig 6, **50a** and fig. 7, **50b** attached to member **34a** the top point of fig. 4 unit devise, attached to member **38a** the inlet main water / liquid feed point, attached to member **40a** the main unit water / liquid inlet valve of fig. 3, attached to member **47a** the in feed to lid / seat cover.

Fig. 7 shows on outline blueprint, where attachment members of **13a, 14a, 34a, 37a, 38a, 47a, 48a, 49a** and **50a** is as in fig 5, and 6 including in fig. 2, 3, and 4, but from a top view looking down on lid / seat cover.

Fig. 8 shows on outline blueprint of series B back view, where attachment member of **56s**, the connection point to member **57s**, the flat leavers which press down when the water pressure flow against / upon it which cause the leavers of member **57s** to push members **55**, the arm pins to function the operation of member **58s** the brackets angle arms attached to member 59, the angle connection as in fig. 9 of series B tail end extending enough into toilet pan little below top surface in the designated location.

Fig 9 shows on outline blueprint of series B side view, where attachment member of **52**, the main head which cause the spray of series B when push into chamber by way of water / liquid press down against flat leavers of members **57sa**, which attached to the connection rods of member **56sa** which attached to the leavers which attached to the head pins to members **54** extended arms which attached to members **55**, the arms pins head to push members **54**, which attached to member **53** the housing frame of fig. 9

Fig. 10 shows on outline blueprint of series B side view, where attachment member of **55s** the arms pins head, attached to members **56s** the connection rods, attached to members **57s** the flat leavers which cause member **70** reaction functioning of water movement coming down / against member **70**, attached to member **58**, the bracket angle attached to member **59**, the angle connection attached to member **61** the main head in cylinder chamber attached to member **61a** cylinder chamber, attached to member **62**, the main head shaft / axel attached to member **63** spring capsule connected to member **64**, attached to member **67** the in-feed water / liquid to capsule chamber, attached to member **64** the spring which cause the operation of water / liquid squeezing out of capsule through member **66** the spray outlet, attached to member **65** unit device head, attached to member **65a** rubbers for tight fix to eliminate any leaking from designate location of series B insert into pan, attached to member **69** the unit device main housing / frame.

Fig. 11 shows on outline blueprint of another device of series A as in fig. 4 but different in style and design etc. where attachment member **23a** the in-feed water / liquid supply to unit device, attached to member **24** the hose connection as push on, attached to member **71** the main hose to device unit, attached to member **72a** rubber flaps for tight seal when push into lid / seat cover, attached to member **26a** the flat surface stop point of unit above lid / seat cover, attached to member **25a** the female bushing head, attached to member **77 a** male screw down nut to secure device to lid / seat cover, attached to member **27a** flexi rubbers for up and down movement of shaft unit, attached to member **73** main shaft rod, attached to member **74s** no return water / liquid point, attached to member **75** the main head in device unit with attached member **75as** rubber seal for stop water / liquid feed into unit, attached to member **75b** a drain off section for water / liquid from top of main head attached to member **76** inlet water feed to main unit coming in from member **23a**, attached to member **75c** head button to activate blue light on to of lid / seat cover, attached to members **34** unit lighting head, attached to member **37a** main cap of the head of device unit, attached to member **78** another no return in the hose which supply the lid / seat cover to control the flow of water / liquid in lid / seat cover, attached to member **36a** the outlet in lid / seat cover.

Fig. 12 shows on outline blueprint of series B, where attached member **65** is the complete unit of fig. 10, which show unit device insert into pan attached member **90** in action of a plush, by attached member **84** coming down in down pipe to push against leavers attached to unit device of fig. 10.

Fig. 13 shows another unit of series B on a close couple cistern outline blueprint, where attached member **65**, the complete unit device fig **10**, insert into back of toilet pan preforming action from a close couple cistern with sanitize water liquid of attached member **79**, by action of attached member **81**, a manual flush handle, attached to member **86** chain connection or by attached member **83**, push button on attached member **82** cistern cover, attached to member **80** syphon within cistern flowing against leavers on attached member **57** in fig. 10, attached in member **90** toilet pan.

Fig. 13a shows on outline blueprint of a three way valve where attached member **91** show the point of water / liquid feed to cistern with a reducing end to accommodate the in-feed to lid / seat cover to preform it operation attached to member **92** the center control of the water distributing coming from supply, attached to member **93** the reduce point to feed lid / seat cover attached to member **94** to out flowing to cistern.

Fig. 13b shows on outline blueprint of the internal control ball which direct the flowing of water / liquid to its designated area, where attached member **95** show the in-feed to supply attached member **96** which goes to lid / seat cover connection, attached to member **97** the continue flow to cistern, attached to member **98** where no supply of water is distribute.

Fig. 13c shows on outline blueprint of the internal control ball, whereas the in-feed supply only going straight to cistern by attached member **99**, attached to member **100** where no water / liquid is supply, attached to member **101** to continue supplying cistern.

Fig. 13d shows on outline blueprint of the internal control ball, whereas at this turn no supply of water / liquid to lid / seat cover or to cistern, where attach member **102** is at zero, meaning no supply of water / liquid to system etc. This in fact is to control all supply of water / liquid should there be any installation / maintenance work need to be carry out etc.
1. What is claim and new is as following: 1 in combination, a flushing technical operative system of generally support device design to work on / within any style of toilet pan, which will provide a spraying method to individual using toilet pan to release themselves. The interconnecting parts design to operate the spraying system in series A and B to function by mean of water accumulated in lid / seat cover container by means of operating device and down flow from down pipes and close couple cistern.
   Water / Liquid increase in volume which contained in lid / seat cover to be release in series A, when button head is press upon by individual in use on a toilet pan. In series B pressure flowing through operating device when needed before going to designate area in the bowl. As the supporting arms which attached to the device extending from the back, function by the water pressure as a way of flushing automatically syphonic action. The size and shape of the device of said relative functioning predetermined of attractable means of materials / parts may including various type of measurement close operating of Spray - O - wash Series A and B.
2. The combination of claim 1 wherein said flush arms means includes integral shapes to fit any toilet pan shape members corresponding to said support functioning device along with the spray method towards said of parts portions thereof.
3. The combination of claim 2 wherein said support flush arms are connected of plastic material and said magnetically attractable means including rubber layer secured to those portions of said parts functioning into moving action by way of water pressure. Which close and opens supporting section to which water flows of said connection means to release the water flow or close when water / liquid reach full volume in lid container thereof.
4. The combination of claim 3 wherein said connection means includes integral shape members on within and out of the spraying device of corresponding ends thereof.
5. In combination, an operative system of generally parallel support connection extending between the cylinder interconnection one side with the other of corresponding ends of said support arms. The other section of said device of corresponding end provide connection whereby the deployment of spraying means including fix and removable parts for servicing thereof.
6. The combination of claim 5 wherein said support parts are constructed of material and said magnetically attractable means included parallel support means combine in an operative system of said corresponding ends of movable parts of design connection thereof.
7. The combination of claim 4-6 wherein said connection means includes integral shape members of said other part of end of said support thereof.

The combination of claim 1-7 wherein said flush arms means includes integral shapes to fit any toilet pan shape members corresponding to said support functioning device along with the spray method towards said of parts portions thereof.

## Claims

1. A spray / flush - **O** - wash series A and B unit / devise of combination comprising attachment built to attach to existing toilet lid / seat covers, and built in new toilet pan and for used by means of attachment. Spray - O- wash series A can freely attached to any open and close lid / seat covers easily by attachment to secure bolts to toilet pans.

2. A spray / flush - **O** - wash series A devise, according to claim 1, of which the functioning means is by a push head cap button of combination within the lid / seat covers on toilet pans.

3. A spray / flush - **O** - wash series A devise, according to claim 1 and 2 in which the functioning means is provided by connecting units in combinations which support the device's main function with attachment springs and plastic tubing which allows the liquid to spray from lid / seat container out to designate area by used of pushing head cap etc.

4. A spray / flush - **O- wash** series A and B devise according to claim 2, 3, 4 and, in which the plastic and metal units connections is fully operated by water / liquid spraying in full functioning combination from the device system .

5. A spray / flush - **O** - wash series A and B device according to claim 4 to 6, in which both the person in used and the device is operational built to the design of the toilet pans and lid / seat covers to use at all time while service is maintains.

6. A spray / Flush - **O** - wash series A and B device unit according to any of the preceding claims, of 1- 7 in which the spray / flush - **O** - wash means is adjustable so that the design operation of its functioning can be varied to cause the same effect of providing a spray / flush - **O** - wash from any toilet pan and lid / seat covers in combination operational of functioning means.
